# EUROPÄISCHE PATENTSCHRIFT

(11) **EP 2 615 126 B1**
(45) Veröffentlichungstag und Bekanntmachung des Hinweises auf die Patenterteilung: **28.08.2013**
(21) Anmeldenummer: 12151240.4
(22) Anmeldetag: 16.01.2012
(51) Int. Cl.: C08J 5/00, C08K 5/54, C08L 97/02, C08J 5/24

(54) **Verwendung von modifizierten Nanopartikeln in Holzwerkstoffen zur Reduzierung der Emission von flüchtigen organischen Verbindungen (VOCs)**
Use of modified nanoparticles in wood materials for reducing the emission of volatile organic compounds (VOCs)
Utilisation de nanoparticules modifiées dans des matières dérivées du bois pour la réduction des émissions de composés organiques volatiles (VOC)

(43) Veröffentlichungstag der Anmeldung: 17.07.2013
(73) Patentinhaber: Kronotec AG, 6006 Luzern (CH)
(72) Erfinder:
(74) Vertreter: Morawski, Birgit

(56) Entgegenhaltungen:
- EP-A1- 2 447 332
- EP-A2- 0 842 967
- EP-A2- 2 111 959
- WO-A1-2008/113181
- DE-A1-102006 006 655

## Beschreibung

Die vorliegende Anmeldung betrifft die Verwendung von modifizierten Nanopartikeln gemäß Anspruch 1, ein Verfahren zur Herstellung von Holzwerkstoffplatten unter Verwendung von modifizierten Nanopartikeln gemäß Anspruch 12 und eine Holzwerkstoffplatte herstellbar in einem solchen Verfahren gemäß Anspruch 15.

Holzwerkstoffplatten bestehen bekanntermaßen aus Lignozellulose oder lignozellulosehaltigen Materialien, wie Holzfasern oder Holzspänen. Lignozellulose umfasst als Bestandteile Zellulose, Hemizellulose und Lignin. Zellulose ist ein langkettiges Makromolekül, bestehend aus Glukoseeinheiten, Hemizellulose ein kurzkettiges, verzweigtes Makromolekül aus Pentosen und Lignin ein dreidimensionales Makromolekül aus Methoxyphenylpropaneinheiten. Zellulose und Hemizellulose bilden die Gerüstsubstanz der Zellwand, während Lignin als Füllsubstanz im Zellgerüst die Verholzung verursacht.

Im Verlaufe der Herstellung von Holzwerkstoffplatten und insbesondere bedingt durch den Herstellungsprozess der Holzspäne entstehen bzw. werden eine Vielzahl von flüchtigen organischen Verbindungen freigesetzt. Zu den flüchtigen organischen Verbindungen, auch VOCs genannt, gehören flüchtige organische Stoffe, die leicht verdampfen bzw. bereits bei niedrigeren Temperaturen, wie zum Beispiel Raumtemperatur als Gas vorliegen.

Zu den leicht flüchtigen organischen Verbindungen (VOC) werden all die Verbindungen gezählt, die leicht flüchtig sind bzw. bereits bei niedrigen Temperaturen gasförmig vorliegen. Typischerweise liegt der Siedepunkt der zu den VOCs zählenden organischen Verbindungen in einem Bereich zwischen 50 bis 260°C. Allerdings ist die Definition von VOCs länderspezifisch und variiert somit entsprechend.

Insbesondere bei der Verwendung von Bauprodukten, wie Holzwerkstoffplatten in Innenräumen stellt die Emission von leicht flüchtigen organischen Verbindungen eine besondere gesundheitliche Belastungsquelle dar.

In Deutschland erfolgt die gesundheitliche Bewertung der Emission von flüchtigen organischen Verbindungen in Innenräumen von Gebäuden durch den Ausschuss zur gesundheitlichen Bewertung von Bauprodukten (AgBB). Gemäß der vom Ausschuss erstellten Kriterien umfassen flüchtige organische Verbindungen (VOC) Substanzen im Retentionsbereich C₆ bis C₁₆ und schwerflüchtige organische Verbindungen (SVOC) Substanzen im Retentionsbereich oberhalb von C₁₆ bis C₂₂. Die leicht flüchtigen organischen Verbindungen (VOC) werden dabei entweder als Einzelstoff oder in der Summe als TVOC (Totale Volatile Organic Compound) betrachtet.

Die VOC-Emission von Bauprodukten wird üblicherweise in Prüfkammem untersucht. Der TVOC-Wert von geeigneten Bauprodukten sollte gemäß der AgBB-Kriterien nach 3 Tagen bei 10 mg/m³ oder darunter und nach 28 Tagen bei 1 mg/m³ oder darunter liegen (AgBB Bewertungsschema für VOC aus Bauprodukten, 2010).

Vergleichbare Richtlinien wurden vom Bundesumweltamt erstellt, gemäß derer eine VOC-Emission von kleiner als 300 µg/m³ als hygienisch unbedenklich eingestuft wurde (Umweltbundesamt 2007, Bundesgesundheitsblatt 7, S. 999-1005).

In der holzverarbeitenden Industrie sind insbesondere die leicht flüchtigen organischen Aldehyde, wie Formaldehyd oder Hexanal, sowie die leicht flüchtigen Terpene von besonderer Bedeutung.

Entsprechend betrifft die vorliegende Anmeldung die Reduzierung von Aldehyden und Terpenen, insbesondere Monoterpenen. Aldehyde, wie Hexanal entstehen dabei entweder aus den natürlichen Bestandteilen im Holz oder durch einen oxidativen Abbau der natürlichen Fette. Terpene sind im natürlichen Holzbestandteil Harz enthalten.

Generell fallen die flüchtigen organischen Verbindungen entweder als Nebenprodukte während des Herstellungsprozesses an oder sie werden während der Nutzung des Produktes langsam an die Umgebungsluft abgegeben. Beide Vorgänge führen zu spezifischen Problemen, die den gesamten Herstellungsprozess verteuern können und/oder zu Geruchsbelästigungen in der Nutzung der Holzfaserplatten führen können.

Die flüchtigen organischen Verbindungen VOC sind entweder bereits im Holzmaterial vorhanden und werden während der Aufarbeitung aus diesem abgegeben oder sie werden nach derzeitigem Erkenntnisstand durch den Abbau von ungesättigten Fettsäuren gebildet, die wiederum Zersetzungsprodukte des Holzes sind. Typische Umwandlungsprodukte, die während der Bearbeitung auftreten, sind zum Beispiel Pentanal und Hexanal, aber auch Octanal, Octenal oder 1-Heptenal. Insbesondere Nadelhölzer, aus denen vorwiegend mitteldichte Faserplatten oder OSB-Platten hergestellt werden, enthalten große Mengen an Harz und Fetten, die zur Bildung von flüchtigen organischen Terpenverbindungen und Aldehyden führen. VOC und Aldehyde, wie Formaldehyd, können jedoch auch bei der Verwendung bestimmter Klebstoffe für die Herstellung der Holzwerkstoffe entstehen.

Bei der VOC-Emission liegen entsprechend ausschließlich holzbedingte Freisetzungen vor, die sich in Primäremissionen von leicht flüchtigen Holzinhaltstoffen, wie Terpenen oder chemischen Abbauprodukten, wie Essigsäure und so genannte Sekundäremissionen, wie zum Beispiel höhere Aldehyde, wie Pentanal oder höhere Carbonsäuren untergliedern.

Die VOC-Emission kann je nach Verwendung der Holzwerkstoffplatten wie z.B. in Form von OSB-Platten und je nach Raumbeladung ein erhebliches Problem darstellen. Im Übrigen stellt die Emission von VOCs einen Nachteil für den an sich ökologischen Holzfaserdämmstoff im Vergleich zu anderen, beispielsweise mineralischen Dämmstoffen, dar.

Aus den genannten Gründen ist es daher erstrebenswert, die Freisetzung von flüchtigen organischen Verbindungen aus Holzwerkstoffplatten zu reduzieren.

Verschiedene Ansätze hierfür wurden in der Vergangenheit gewählt. So beschreibt die DE 10 2007 050 935 A1 ein Verfahren zur Herstellung von Holzwerkstoffen, wobei den Holzfasern vor dem Verpressen ein glutenhaltiger Klebstoff, ein milchproteinhaltiger Klebstoff, ein pflanzenproteinhaltiger Klebstoff oder Derivate dieser Klebstoffe zugesetzt werden. Glutenhaltige Klebstoffe sind Hautleim, Knochenleim, Lederleim; milchproteinhaltige Klebstoffe sind unter anderem Kaseinklebstoffe und pflanzenproteinhaltige Klebstoffe sind unter anderem Sojaklebstoffe.

In der US 2009/0130474 A1 werden Aldehyd-Fänger zu einem Holzmaterial oder Bindematerial zugegeben. Als typischer Aldehyd-Fänger werden hier Bisulfite, Pyrosulfite, wie zum Beispiel Natriumhydrogensulfit, Kaliumhydrogensulfit, Zinksulfit, Magnesiumsulfit oder Aluminiumsulfit, und Dithionite beschrieben.

Gemäß der WO 2010/136106 wird während der Herstellung von Holzwerkstoffprodukten dem Gemisch aus Holzfasern und Klebstoff ein Zeolith als Aldehyd-Fänger zugegeben. Bei Verwendung von Zeolithen als Aldehyd-Fänger ergeben sich jedoch einige Nachteile. So müssen z.B. relativ hohe Mengen von etwa 5% auf atro Holz eingesetzt werden.

Der vorliegenden Erfindung liegt die technische Aufgabe zugrunde, die Emissionen, das heißt, die Emission an leicht flüchtigen organischen Verbindungen, wie den Aldehyden und Terpenen aus Holzwerkstoffplatten wie z.B. OSB-Platten langfristig auf ein möglichst niedriges Niveau zu reduzieren.

Die gestellte Aufgabe wird durch die Verwendung von modifizierten Nanopartikeln gemäß den Merkmalen des Anspruchs 1 gelöst.

Entsprechend werden gemäß der vorliegenden Erfindung modifizierte Nanopartikel in Holzwerkstoffplatten, insbesondere OSB-Platten, zur Reduzierung der Emission von flüchtigen organischen Verbindungen (VOCs) verwendet, wobei die Nanopartikel mit mindestens einer Verbindung der allgemeinen Formel (I)

**R₈SiX₍₄₋ₐ₎** **(I),**

modifiziert sind, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, und
- wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy-, Isocyanato-, Aldehyd-, Alkylcarbonyl-, Säureanhydrid- und/oder Phosphorsäuregruppe, und
- a = 1, 2, 3, insbesondere 1 oder 2 ist.

Die zum Einsatz kommenden Nanopartikel, insbesondere oxidische, hydroxidische oder oxihydroxidische Nanopartikel auf der Basis von SiO₂, Al₂O₃, ZrO₂, TiO₂ SnO, weisen eine durch Hydroxygruppen erzeugte hydrophile Oberfläche auf und können somit mittels Kondensation chemisch in die Holzfasermatrix eingebunden werden. Darüber hinaus ermöglicht die hydrophile Partikeloberfläche ein chemisches Anbinden bzw. Ankoppeln der verschiedenen Silanverbindungen.

Die funktionalisierten Silanverbindungen werden durch eine vorgelagerte Hydrolyse und Kondensationsprozess unter Verwendung von Säuren oder Basen in Anwesenheit von Wasser an die hydrophile Oberfläche der nanoskaligen Partikel angebunden.

Die modifizierten Nanopartikel werden bevorzugt in einem Verfahren hergestellt, bei welchem die Partikel zunächst in wässriger Lösung mit einem geeigneten Katalysator, insbesondere Säure oder Base, vorgelegt werden und anschließend die entsprechenden Silanverbindungen bei Temperaturen zwischen 50°C und 80°C zugefügt werden. Dabei kommt es zur Hydrolyse mit anschließender Kondensation der Silane auf der Partikeloberfläche, wobei ca. 90% der Silane auf der Partikeloberfläche gebunden werden.

Bei der Herstellung dieser Partikel wird bevorzugt eine wässrige Lösung erhalten, die Nanopartikel mit einer Silan-Schicht (Silan-Monolayer) auf der Oberfläche und hydrolysierte, aber ggf. noch nicht ankondensierte Silan-Monomere enthält.

Das Vorliegen einer Silan-Schicht (Silan Monolayer) auf der Partikeloberfläche ergibt sich aus der Konzentration von 0,1 bis 0,8 mmol Silan/g Partikel, bevorzugt 0,4 bis 0,6 mmol Silan/g Partikel (gemessen mittels TEM).

Der Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

Der nicht-hydrolisierbare Rest R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl. Bei Verwendung von Cycloalkyl und Cycloalkenyl- Resten sind diese bevorzugt mittels eines C₁-C₁₀, insbesondere eines C₁-C₆ Alkyl-Linkers am Si-Atom gebunden. Auch ist es denkbar, dass bei Verwendung von Alkenyl- oder Cycloalkenyl- Gruppen als Rest R diese nicht unbedingt eine funktionelle Gruppe Q aufweisen müssen. In diesen Fällen wäre Q entsprechend H.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, substituiertes und nicht- substituiertes Butadienyl oder substituiertes und nicht-substituiertes Cyclohexadienyl.

Unter dem Begriff "nicht-hydrolysierbarer organischer Rest" ist im Rahmen der vorliegenden Anmeldung ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest enthalten ist, umfasst bevorzugt eine Aminogruppe, eine Monoalkylaminogruppe, eine Arylgruppe, insbesondere eine Phenylgruppe, eine Hydroxygruppe, eine Acrylgruppe, Acryloxygruppe, Methacrylgruppe oder eine Methacryloxygruppe, eine Epoxid-, insbesondere ein Glycidyl- oder Glycidyloxy-Gruppe, und/oder eine Isocyano-Gruppe. Besonders bevorzugt ist als funktionelle Gruppe Q eine Aminogruppe, Hydroxygruppe und/oder Phenylgruppe.

Wie beschrieben, verfügt der nicht-hydrolisierbare Rest R über mindestens eine funktionelle Gruppe Q. Darüber hinaus kann der Rest R auch mit weiteren Resten substituiert vorliegen.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet bevorzugt einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di-und Tri-ine von geraden und verzweigten Alkylketten.

Der Begriff "Aryl", wie hierin verwendet, bezeichnet bevorzugt aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten substituiert sind.

Der Begriff "Cycloalkyl" umfasst bevorzugt die Gruppen Cyclopropyl, Cyclobutyl, Cyclopentyl, Cyclohexyl und Cycloheptyl.

Der Begriff "Cycloalkenyl" umfasst bevorzugt substituierte oder nicht-substituierte cyclische Gruppen wie Cyclopentenyl oder Cyclohexenyl. Auch werden vom dem Begriff "Cycloalkenyl" cyclische Gruppen mit konjugierten Doppelbindungen wie z.B Cyclohexadiene abgedeckt.

Der Begriff "Alkenyl" umfasst im Sinne der vorliegenden Anmeldungen Gruppen mit einer oder mehreren Doppelbindungen, wobei die Doppelbindungen auch in konjugierter Form vorliegen können, wie z.B. Butadiene.

Die funktionelle Gruppe Q ist insbesondere eine Gruppe, die eine Reaktion mit einer Aldehydgruppe eingehen kann. So kann z.B. eine Aminogruppe mit einem Aldehyd unter Ausbildung einer Schiffschen Base reagieren. Auch kann eine Hydroxygruppe mit einem Aldehyd unter Ausbildung eines Acetals bzw. Hemiacetals abreagieren.

Bei Verwendung einer Arylgruppe wie z.B. einer Phenylgruppe als funktionelle Gruppe Q kann die aromatische Gruppe als Radikalfänger der im Verlaufe der Holzverarbeitung gebildeten Radikale, insbesondere von Aldehyd-Radikalen und Terpen-Radikalen, fungieren, so dass auch es auch hier zu einem Abfangen der leicht flüchtigen Aldehyde und Terpene kommt.

Der Einsatz von Alkenylen, insbesondere Alkenylen mit konjugierter Doppelbindung wie substituiertes und nicht-substitzuiertes Butadienyl oder Cycloalkenylen, insbesondere Cycloalkenylen mit konjugierter Doppelbindung wie z.B. substituiertes und nicht-substituiertes Cyclohexadienyl ermöglicht die Umsetzung von leicht flüchtigen Terpenen in einer thermischen Diels-Alder-Reaktion. Bei Auswahl von geeigneten Dienverbindungen werden dabei höhermolekulare cyclische Verbindungen gebildet, die nicht mehr flüchtig sind, und somit im Holz verbleiben.

Besonders bevorzugte Silanverbindungen, die vorliegend verwendet werden, sind Aminoethylaminoethylaminopropyltrimethoxysilan, Aminopropyltrimethoxysilan, Phenyltriethoxysilan.

Die bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel lonenaustauschprozess, Plasma-Prozess, Sol-Gel Verhahren, Vermahlung oder auch Flammabscheidung, hergestellt werden können. In einer bevorzugten Ausführungsform werden Partikel auf Basis von SiO₂ Al₂O₃, ZrO₂, TiO₂ SnO verwendet, wobei SiO₂-Partikel ganz besonders bevorzugt sind.

Die vorliegend verwendeten Nanopartikel können eine spezifische Oberfläche von 50 bis 500 m²/g, bevorzugt von 100 bis 400 m²/g, insbesondere bevorzugt von 200 bis 300 m²/g aufweisen. Die Bestimmung der spezifischen Oberfläche erfolgte über Messungen der Adsorption von Stickstoff nach der BET-Methode von Brunauer, Emmett und Teller.

Es ist besonders bevorzugt, wenn die modifizierten Nanopartikel zur Reduzierung von aus in der Holzwerkstoffplatte verwendeten Holzspänen freigesetzten Aldehyden, insbesondere C₁-C₁₀ Aldehyden, insbesondere bevorzugt Formaldehyd, Acetaldehyd, Pentanal, Hexanal u.a. eingesetzt werden. Wie oben ausführlich erläutert erfolgt eine Freisetzung von Aldehyden insbesondere während der Aufarbeitung des Holzes.

Es ist ebenfalls bevorzugt, wenn die modifizierten Nanopartikel zur Reduzierung von aus in der Holzwerkstoffplatte verwendeten Holzspänen freigesetzten Terpenen, insbesondere C₁₀-Monoterpene und C₁₅-Sesquiterpene, insbesondere bevorzugt acyclische oder cyclische Monoterpene eingesetzt werden.

Typische acyclische Terpene sind Terpenkohlenwasserstoffe wie Mycren, Terpenalkohole wie Geraniol, Linalool, Ipsenol und Terpenaldehyde wie Citral. Typische Vertreter der monocyclischen Terpene sind p-Methan, Terpinen, Limonen oder Carvon, und typische Vertreter der bicyclischen Terpene sind Caran, Pinan, Bornan, wobei insbesondere 3-Caren und α-Pinen von Bedeutung sind. Terpene sind Bestandteile der Baumharze und sind daher besonders in sehr harzhaltigen Baumarten wie Kiefer oder Fichte vorhanden.

Die modifizierten Partikel werden in einem Verfahren zur Herstellung einer Holzwerkstoffplatte, insbesondere einer OSB-Platte, mit einer reduzierten Emission von flüchtigen organischen Verbindungen (VOCs) verwendet, wobei das Verfahren die folgenden Verfahrensschritte umfasst:
a) Herstellen von Hackschnitzeln aus geeigneten Hölzern,
b) Zerspanen der Hackschnitzel zu Holzspänen,
c) Zwischenlagerung der Holzspäne, insbesondere in Silos oder Bunkern,
d) Trocknen der Holzspäne,
e) Sortieren bzw. Sichtung der Holzspäne entsprechend der Größe der Holzspäne,
f) ggf. weitere Zerkleinerung der Holzspäne,
g) Aufbringen der Holzspäne auf ein Transportband mittels Wind- und/oder Wurfsichtung unter Ausbildung einer Streumatte,
h) Verpressen der auf dem Transportband angeordneten Holzspäne, wobei mindestens eine Suspension enthaltend die beschriebenen modifizierten Nanopartikel vor, während und/oder nach einem der Schritte b) bis h) zugegeben wird.

Die modifizierten Nanopartikel können also zu jedem Zeitpunkt des Herstellungsverfahrens der Holzwerkstoffplatten mit den Holzspänen vermischt werden. Es ist auch vorstellbar, dass die Suspension enthaltend die modifizierten Partikel an mehreren Stellen während des Verfahrens auf die Holzspäne aufgetragen wird.

Ebenfalls kann ein geeigneter Leim bzw. Klebstoff zu jedem Zeitpunkt des Herstellungsverfahrens mit den Holzspänen vermischt bzw. auf diese aufgesprüht werden.

Zusätzlich zu den oben aufgeführten Verfahrensschritten werden die Hackschnitzel bevorzugt vor ihrer Zerkleinerung von Fremdstoffen z.B. im Rahmen einer Trockenreinigung oder Nassreinigung gereinigt.

In einer Ausführungsform des Verfahrens erfolgt eine Aufteilung der hergestellten Späne in Deck- und Mittelschicht. Dies erfolgt durch eine Siebung, bei der das Spanmaterial abhängig von der Größe sortiert wird. Die Mittelschicht umfasst dabei bevorzugt kleinere Holzspäne und die Deckschicht größere Holzspäne.

Danach erfolgt in einer weiteren Ausführungsform die Beleimung der Deck- und Mittelschicht durch die Aufsprühung eines geeigneten Leims unter Hochdruck und eine anschließende Vermischung in einem Coil. Die Beleimung und Vermischung erfolgt separat von Deck- und Mittelschicht.

Die Verfahren zur Herstellung von OSB-Platten unterscheiden sich von den Verfahren zur Spanplattenherstellung oder Faserplattenherstellung insbesondere in Hinblick auf die Größe und Beschaffenheit der verwendeten Holzspäne sowie in Hinblick auf die verwendeten Drücke und Temperaturen. Der wesentliche Verfahrensablauf und damit die Reihenfolge der Verfahrensschritte sind bei allen Platten jedoch ähnlich und dem Fachmann bekannt.

Im vorliegenden Verfahren kommt bevorzugterweise eine die modifizierten Nanopartikel enthaltende Suspension zum Einsatz. Dabei wird eine Suspension in Form einer wässrigen Lösung mit einem Anteil an modifizierten Nanopartikeln von mindestens 20 Gew%, bevorzugt von mindestens 40 Gew%, insbesondere bevorzugt von mindestens 50 Gew% verwendet.

Die Suspension enthaltend die modifizierten Nanopartikel kann in verschiedener Weise in die Holzwerkstoffplatte während des Herstellungsverfahrens eingeführt werden.

So kann die die modifizierten Nanopartikel enthaltende Suspension mit dem aufzutragenden Leim oder Klebstoff vermischt werden, gleichzeitig mit dem Leim oder Klebstoff auf die Holzspäne aufgetragen werden, auf die Holzspäne vor der Trocknung derselbigen aufgesprüht werden oder auf die Streumatte aus Holzspänen vor dem Verpressen aufgesprüht werden.

In einer Ausführungsform erfolgt somit die Zugabe der Suspension einer reinen wässrigen Nanopartikellösung gleichzeitig mit der Beleimung der Deckschicht- und/oder Mittelschicht.

In einer weiteren Variante erfolgt die Zugabe bzw. primäre Vermischung einer reinen wässrigen Nanopartikellösung mit dem Leim und die anschließende Beleimung der Späne mit dieser Mischung aus Leim mit Nanopartikel. Auch ist es in diesem Zusammenhang denkbar, die wässrige Nanopartikellösung während der Leimproduktion einzubringen.

Auch ist es gemäß dem vorliegenden Verfahren möglich, eine Suspension einer reinen wässrigen Nanopartikellösung vor der Trocknung der Späne und somit vor dem Streuen zu diesen zuzugeben, z.B. mittels Aufzusprühen.

In einer noch weiteren Variante ist es möglich, die Streumatte aus Holzspänen auf der Oberfläche mit der wässrigen Nanopartikellösung zu besprühen.

Gegenstand der vorliegenden Erfindung ist ebenfalls eine Holzwerkstoffplatte, insbesondere eine OSB-Werkstoffplatte, herstellbar in dem oben beschriebenen Verfahren.

Die gemäß dem vorliegenden Verfahren hergestellte Holzwerkstoffplatte weist eine Aldehydemission, insbesondere Hexanal-Emission von weniger als 1000 µg/m³, insbesondere von weniger als 800 µg/m³, besonders bevorzugt von weniger als 500 µg/m3 und eine Terpen-Emission, insbesondere von von 3-Caren von weniger als 2000 µg/m³, insbesondere von weniger als 1500 µg/m³ auf. Die angegeben Werte beziehen sich jeweils auf Messungen in einer Mikrokammer, die kommerziell erhältlich ist.

Die Erfindung wird nachfolgend anhand mehrerer Ausführungsbeispieles näher erläutert.

### Ausführungsbeispiele

Es wurden mehrere OSB-Proben in der Mikrokammer auf ihre VOC-Emission untersucht. Bei der Probe 0 handelt es sich um die Nullprobe. Allen weiteren Probe 1-3 wurden verschieden modifizierte Nanopartikel zugesetzt, die an der Oberfläche mit unterschiedlichen funktionellen Gruppen entsprechend der folgenden Tabelle 1 modifiziert wurden.

**Tabelle 1: in den Proben verwendete modifizierte Nanopartikel**

| **Probe bzw. Platte** | **Silan** | **[mmol] Silan/ g SiO2 Partikel** |
|---|---|---|
| 0 | - | - |
| 1 | Aminoethylaminoethylaminopropyltrimethoxysilan | 0,42 |
| 2 | Aminopropyltrimethoxysilan | 0,45 |
| 3 | Phenyltriethoxysilan | 0,46 |

### Anfertigung der Laborplatten:

An der Laborpresse wurden mehrere OSB Versuchsplatten im Format 12 mm x 300 mm x 300 mm und einer Rohdichte von 650 kg/m³ hergestellt. Bei der ersten Platte 0 wurde kein Additiv hinzugefügt. Die Dosierung erfolgt nur in der Deckschicht. Dazu wurden die beleimten Strands (12% MUPF) der Produktionslinie entnommen und mit dem jeweiligen Additiv gleichmäßig vermischt und anschließend gestreut. Die Dosierung erfolgte jeweils mit 40 g modifizierten Partikeln (außer bei Probe 0) pro 140 g beleimter Deckschicht. Die Mittelschicht wurde nicht modifiziert, sondern der Linie (PMDI beleimt) entnommen.

### Ergebnisse:

Die Emission der OSB- Platten wird dabei in Form der Emissionsrate mit der Einheit [µg/m³] angegeben, wobei von einer flächenspezifischen Lüftungsrate q = 1 m³/(m²*h) ausgegangen wird.

Im Folgenden wird der Effekt der modifizierten Partikel auf die VOC-Substanzen n-Hexanal als Vertreter der Aldehyde und 3-Caren als Vertreter der monocyclischen Terpene beschrieben.

Die Reduktionsraten von Hexanal und 3-Caren bei Verwendung der verschiedenen modifizierten Partikel sind in der nachfolgenden Tabelle 2 zusammengefasst.

**Tabelle 2: Emissionsraten von Hexanal und 3-Caren der untersuchten Proben**

| **Probe** | **n-Hexanal [µg/m3]** | **3-Caren [µg/m3]** |
|---|---|---|
| 0 | 872 | 1972 |
| 1 | 295 | 1941 |
| 2 | 434 | 1086 |
| 3 | 733 | 1356 |

Eine Reduktion von n-Hexanal ist im Vergleich zur Nullprobe bei Probe 1 um 66%, bei Probe 2 um 50% und Probe 3 um 16% zu erkennen. Die Reduktion von 3-Caren liegt bei Probe 2 bei 45% und Probe 3 bei 31 %.

Die Verwendung der modifizierten Nanopartikel führt somit in Abhängigkeit der zur Modifizierung verwendeten Silanverbindungen zu einer Reduzierung des emittierten Hexanals und 3-Carens. Die unterschiedlichen Reduktionsraten von Hexanal und 3-Caren bei Verwendung der modifizierten Nanopartikel sind offensichtlich auf die verschiedenen funktionalisierten Silane zurückzuführen. So kann die starke Reduktion von Hexanal in den Proben 1 und 2 durch die Reaktion der freien Aminogruppen der funktionalisierten Partikel mit der Aldehydgruppe des Hexanals unter Ausbildung einer Schiffschen Base erklärt werden.

## Patentansprüche

1. Verwendung von modifizierten Nanopartikeln in Holzwerkstoffplatten zur Reduzierung der Emission von flüchtigen organischen Verbindungen (VOCs), wobei die Nanopartikel mit mindestens einer Verbindung der allgemeinen Formel (I)
RₐSiX₍₄₋ₐ₎ (I),
modifiziert sind, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl, substituiertes und nicht-substituiertes Cycloalkenyl, die durch -O- oder -NH- unterbrochen sein können, und
- wobei R mindestens eine funktionelle Gruppe Q aufweist, die ausgewählt ist aus einer Gruppe enthaltend eine Epoxid-, Hydroxy-, Ether-, Amino-, Monoalkylamino, Dialkylamino-, substituierte und nicht-substituierte Anilino-, Amid-, Carboxy-, Alkinyl-, Acryl-, Acryloxy-, Methacryl-, Methacryloxy-, Mercapto,- Cyano-, Alkoxy-, Isocyanato-, Aldehyd-, Alkylcarbonyl-, Säureanhydrid- und/oder Phosphorsäuregruppe, und
- a = 1, 2, 3 ist.

2. Verwendung nach Anspruch 1, **dadurch gekennzeichnet, dass** X ausgewählt ist aus einer Gruppe enthaltend Fluor, Chlor, Brom, lod, C₁₋₆-Alkoxy, C₆₋₁₀-Aryloxy, C₂₋₇-Acyloxy, C₂₋₇-Alkylcarbonyl, Monoalkylamino oder Dialkylamino mit C₁ bis C₁₂.

3. Verwendung nach Anspruch 1 oder 2, **dadurch gekennzeichnet, dass** R ausgewählt ist aus einer Gruppe umfassend substituiertes und nicht-substituiertes C₁-C₃₀-Alkyl, substituiertes und nicht-substituiertes C₂-C₆-Alkenyl, substituiertes und nicht-substituiertes C₃-C₈-Cycloalkyl und substituiertes und nicht-substituiertes C₃-C₈-Cycloalkenyl.

4. Verwendung nach einem der vorhergehenden Ansprüche, **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, substituiertes und nicht-substitzuiertes Butadienyl oder substituiertes und nicht-substituiertes Cyclohexadienyl.

5. Verwendung nach einem der vorhergehenden Ansprüche, **dadurch gekennzeichnet, dass** die funktionelle Gruppe Q eine Aminogruppe, eine Monoalkylaminogruppe, eine Arylgruppe, eine Hydroxygruppe, eine Acrylgruppe, Acryloxygruppe, Methacrylgruppe oder eine Methacryloxygruppe, eine Epoxid-, und/oder eine Isocyano-Gruppe ist.

6. Verwendung nach einem der vorhergehenden Ansprüche, **dadurch gekennzeichnet, dass** die funktionelle Gruppe Q eine Aminogruppe, Hydroxygruppe und/oder Phenylgruppe ist.

7. Verwendung nach einem der vorhergehenden Ansprüche, **dadurch gekennzeichnet, dass** die Nanopartikel eine Größe zwischen 2 und 400 nm aufweisen.

8. Verwendung nach einem der vorhergehenden Ansprüche, **dadurch gekennzeichnet, dass** die Nanopartikel eine spezifische Oberfläche von 50 bis 500 m²/g-aufweisen.

9. Verwendung nach einem der vorhergehenden Ansprüche, **dadurch gekennzeichnet, dass** die Nanopartikel oxidische, hydroxidische oder oxihydroxidische Nanopartikel-sind.

10. Verwendung nach einem der vorhergehenden Ansprüche, **dadurch gekennzeichnet, dass** die modifizierten Nanopartikel zur Reduzierung von aus den in der Holzwerkstoffplatte verwendeten Holzspänen freigesetzten Aldehyden eingesetzt werden

11. Verwendung nach einem der vorhergehenden Ansprüche, **dadurch gekennzeichnet, dass** die modifizierten Nanopartikel zur Reduzierung von aus den in der Holzwerkstoffplatte verwendeten Holzspänen freigesetzten Terpenen eingesetzt werden.

12. Verfahren zur Herstellung einer Holzwerkstoffplatte mit einer reduzierten Emission von flüchtigen organischen Verbindungen (VOCs) umfassend die folgenden Verfahrensschritte:
a) Herstellen von Hackschnitzeln aus geeigneten Hölzern,
b) Zerspanen der Hackschnitzel zu Holzspänen,
c) Zwischenlagerung der Holzspäne,
d) Trocknen der Holzspäne,
e) Sortieren bzw. Sichtung der Holzspäne entsprechend der Größe der Holzspäne,
f) ggf. weitere Zerkleinerung der Holzspäne
g) Aufbringen der Holzspäne auf ein Transportband mittels Wind- und/oder Wurfsichtung unter Ausbildung einer Streumatte,
h) Verpressen der auf dem Transportband angeordneten Holzspäne
**dadurch gekennzeichnet, dass**
mindestens eine Suspension enthaltend modifizierte Nanopartikel nach einem der vorhergehenden Ansprüche , wobei die Suspension in Form einer wässrigen Lösung mit einem Anteil an modifizierten Nanopartikeln von mindestens 20 Gew% vorliegt, vor, während und/oder nach einem der Schritte b) bis h) zugegeben wird.

13. Verfahren nach Anspruch 12, **dadurch gekennzeichnet, dass** die die modifizierten Nanopartikel enthaltende Suspension mit mindestens einem aufzutragenden Leim vermischt wird, gleichzeitig mit dem aufzutragenden Leim auf die Holzspäne aufgetragen wird, auf die Holzspäne vor dem Trocknen derselbigen aufgesprüht wird oder auf die Streumatte aus Holzspänen vor dem Verpressen aufgesprüht wird.

14. Verfahren nach Anspruch 12 oder 13, **dadurch gekennzeichnet, dass** eine Suspension in Form einer wässrigen Lösung mit einem Anteil an modifizierten Nanopartikeln von mindestens 40 Gew% verwendet wird.

15. Holzwerkstoffplatte herstellbar in einem Verfahren nach einem der Ansprüche 12 bis 14.

## Claims

1. Use of modified nanoparticles in woodbase panels for reduction of the emission of volatile organic compounds (VOCs), the nanoparticles being modified with at least one compound of the general formula (I)
**RₐSiX₍₄₋ₐ₎** **(I)**
where
- X is H, OH or a hydrolysable radical selected from the group comprising halogen, alkoxy, carboxyl, amino, monoalkylamino or dialkylamino, aryloxy, acyloxy, alkylcarbonyl,
- R is a non-hydrolysable organic radical R selected from the group comprising substituted and unsubstituted alkyl, substituted and unsubstituted aryl, substituted and unsubstituted alkenyl, substituted and unsubstituted alkynyl, substituted and unsubstituted cycloalkyl, substituted and unsubstituted cycloalkenyl, which may be interrupted by -O- or -NH-, and
- where R has at least one functional group Q selected from a group comprising an epoxide, hydroxyl, ether, amino, monoalkylamino, dialkylamino, substituted and unsubstituted aniline, amide, carboxyl, alkynyl, acryloyl, acryloyloxy, methacryloyl, methacryloyloxy, mercapto, cyano, alkoxy, isocyanate, aldehyde, alkylcarbonyl, acid anhydride and/or phosphoric acid group, and
- a = 1, 2, 3.

2. Use according to Claim 1, **characterized in that** X is selected from a group comprising fluorine, chlorine, bromine, iodine, C₁₋₆-alkoxy, C₆₋₁₀-aryloxy, C₂₋₇-acyloxy, C₂₋₇-alkylcarbonyl, monoalkylamino or dialkylamino with C₁ to C₁₂.

3. Use according to Claim 1 or 2, **characterized in that** R is selected from a group comprising substituted and unsubstituted C₁₋₃₀-alkyl, substituted and unsubstituted C₂₋₆-alkenyl, substituted and unsubstituted C₃₋₈-cycloalkyl and substituted and unsubstituted C₃₋₈-cycloalkenyl.

4. Use according to any of the preceding claims, **characterized in that** R is selected from the group comprising methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, substituted and unsubstituted butadienyl and substituted and unsubstituted cyclohexadienyl.

5. Use according to any of the preceding claims, **characterized in that** the functional group Q is an amino group, a monoalkylamino group, an aryl group, a hydroxyl group, an acryloyl group, acryloyloxy group, methacryloyl group or a methacryloyloxy group, an epoxide group and/or an isocyano group.

6. Use according to any of the preceding claims, **characterized in that** the functional group Q is an amino group, hydroxyl group and/or phenyl group.

7. Use according to any of the preceding claims, **characterized in that** the nanoparticles have a size between 2 and 400 nm.

8. Use according to any of the preceding claims, **characterized in that** the nanoparticles have a specific surface area of 50 to 500 m²/g.

9. Use according to any of the preceding claims, **characterized in that** the nanoparticles are oxidic, hydroxidic or oxyhydroxidic nanoparticles.

10. Use according to any of the preceding claims, **characterized in that** the modified nanoparticles are used for reduction of the level of aldehydes released from the wood shavings used in the woodbase panel.

11. Use according to any of the preceding claims, **characterized in that** the modified nanoparticles are used for reduction of the level of terpenes released from the wood shavings used in the woodbase panel.

12. Process for producing a woodbase panel having reduced emission of volatile organic compounds (VOCs), comprising the following process steps:
a) producing woodchips from suitable woods,
b) converting the woodchips to wood shavings,
c) intermediately storing the wood shavings,
d) drying the wood shavings,
e) sorting or sifting the wood shavings according to the size of the wood shavings,
f) if appropriate further comminuting the wood shavings,
g) applying the wood shavings to a conveyor belt by means of wind-sifting and/or throw-sifting, forming a mat of scattered material,
h) pressing the wood shavings arranged on the conveyor belt,
**characterized in that** at least one suspension comprising modified nanoparticles according to any of the preceding claims is added, in which case the suspension is in the form of an aqueous solution having a proportion of modified nanoparticles of at least 20% by weight, before, during and/or after one of steps b) to h).

13. Process according to Claim 12, **characterized in that** the suspension comprising the modified nanoparticles is mixed with at least one glue to be applied, applied to the wood shavings simultaneously with the glue to be applied, sprayed onto the wood shavings before they are dried, or sprayed onto the mat of scattered wood shavings prior to pressing.

14. Process according to Claim 12 or 13, **characterized in that** a suspension in the form of an aqueous solution having a proportion of modified nanoparticles of at least 40% by weight is used.

15. Woodbase panel producible in a process according to any of Claims 12 to 14.

## Revendications

1. Utilisation de nanoparticules modifiées dans des panneaux dérivés du bois pour la réduction de l'émission de composés organiques volatils (COV), les nanoparticules étant modifiées avec au moins un composé de formule générale (I)
RₐSiX₍₄₋ₐ₎ (I)
dans laquelle
- X représente H, OH ou un radical hydrolysable choisi dans le groupe comprenant halogène, alcoxy, carboxy, amino, monoalkylamino ou dialkylamino, aryloxy, acyloxy, alkylcarbonyle,
- R représente un radical organique non hydrolysable R choisi dans le groupe comprenant alkyle substitué et non substitué, aryle substitué et non substitué, alcényle substitué et non substitué, alcynyle substitué et non substitué, cycloalkyle substitué et non substitué, cycloalcényle substitué et non substitué, qui peuvent être interrompus par -O- ou -NH-, et
- R comprenant au moins un groupe fonctionnel Q choisi dans un groupe contenant un groupe époxyde, hydroxy, éther, amino, monoalkylamino, dialkylamino, anilino substitué et non substitué, amide, carboxy, alcynyle, acryle, acryloxy, méthacryle, méthacryloxy, mercapto, cyano, alcoxy, isocyanato, aldéhyde, alkylcarbonyle, anhydride d'acide et/ou acide phosphorique, et
- a = 1, 2, 3.

2. Utilisation selon la revendication 1, **caractérisée en ce que** X est choisi dans un groupe contenant fluor, chlore, brome, iode, alcoxy en C₁₋₆, aryloxy en C₆₋₁₀, acyloxy en C₂₋₇, alkylcarbonyle en C₂₋₇, monoalkylamino ou dialkylamino en C₁ à C₁₂.

3. Utilisation selon la revendication 1 ou 2, **caractérisée en ce que** R est choisi dans un groupe comprenant alkyle en C₁-C₃₀ substitué et non substitué, alcényle en C₂-C₆ substitué et non substitué, cycloalkyle en C₃-C₈ substitué et non substitué et cycloalcényle en C₃-C₈ substitué et non substitué.

4. Utilisation selon l'une quelconque des revendications précédentes, **caractérisée en ce que** R est choisi dans le groupe contenant méthyle, éthyle, n-propyle, isopropyle, n-butyle, s-butyle, t-butyle, pentyle, hexyle, cyclohexyle, vinyle, 1-propényle, 2-propényle, butényle, acétylényle, propargyle, butadiényle substitué et non substitué ou cyclohexadiényle substitué et non substitué.

5. Utilisation selon l'une quelconque des revendications précédentes, **caractérisée en ce que** le groupe fonctionnel Q est un groupe amino, un groupe monoalkylamino, un groupe aryle, un groupe hydroxy, un groupe acryle, un groupe acryloxy, un groupe méthacryle ou un groupe méthacryloxy, un groupe époxyde et/ou un groupe isocyano.

6. Utilisation selon l'une quelconque des revendications précédentes, **caractérisée en ce que** le groupe fonctionnel Q est un groupe amino, un groupe hydroxy et/ou un groupe phényle.

7. Utilisation selon l'une quelconque des revendications précédentes, **caractérisée en ce que** les nanoparticules présentent une taille comprise entre 2 et 400 nm.

8. Utilisation selon l'une quelconque des revendications précédentes, **caractérisée en ce que** les nanoparticules présentent une surface spécifique de 50 à 500 m²/g.

9. Utilisation selon l'une quelconque des revendications précédentes, **caractérisée en ce que** les nanoparticules sont des nanoparticules oxydiques, hydroxydiques ou oxyhydroxydiques.

10. Utilisation selon l'une quelconque des revendications précédentes, **caractérisée en ce que** les nanoparticules modifiées sont utilisées pour la réduction des aldéhydes libérés des copeaux de bois utilisés dans les panneaux dérivés du bois.

11. Utilisation selon l'une quelconque des revendications précédentes, **caractérisée en ce que** les nanoparticules modifiées sont utilisées pour la réduction des terpènes libérés des copeaux de bois utilisés dans les panneaux dérivés du bois.

12. Procédé de fabrication d'un panneau dérivé du bois présentant une émission réduite de composés organiques volatils (COV), comprenant les étapes de procédé suivantes :
a) la fabrication d'éclats de bois à partir de bois appropriés,
b) le déchiquetage des éclats de bois en copeaux de bois,
c) l'entreposage des copeaux de bois,
d) le séchage des copeaux de bois,
e) le tri ou la classification des copeaux de bois selon la taille des copeaux de bois,
f) éventuellement le broyage supplémentaire des copeaux de bois,
g) l'application des copeaux de bois sur une bande de transport par classification pneumatique et/ou par lancement avec formation d'un mat dispersé,
h) la compression des copeaux de bois agencés sur la bande de transport,
**caractérisé en ce qu'**au moins une suspension contenant des nanoparticules modifiées selon l'une quelconque des revendications précédentes, la suspension se présentant sous la forme d'une solution aqueuse contenant une proportion de nanoparticules modifiées d'au moins 20 % en poids, est ajoutée avant, pendant et/ou après l'une quelconque des étapes b) à h).

13. Procédé selon la revendication 12, **caractérisé en ce que** la suspension contenant les nanoparticules modifiées est mélangée avec au moins une colle à appliquer, appliquée sur les copeaux de bois simultanément avec la colle à appliquer, pulvérisée sur les copeaux de bois avant le séchage de ceux-ci ou pulvérisée sur le mat dispersé de copeaux de bois avant la compression.

14. Procédé selon la revendication 12 ou 13, **caractérisé en ce qu'**une suspension sous la forme d'une solution aqueuse contenant une proportion de nanoparticules modifiées d'au moins 40 % en poids est utilisée.

15. Panneau dérivé du bois pouvant être fabriqué par un procédé selon l'une quelconque des revendications 12 à 14.
